# FASCICULE DE BREVET EUROPEEN

(11) **EP 3 233 749 B1**
(45) Date de publication et mention de la délivrance du brevet: **29.04.2020**
(21) Numéro de dépôt: 15823647.1
(22) Date de dépôt: 14.12.2015
(51) Int. Cl.: C03C 17/36, F24C 15/10

(54) **VITRAGE UTILISE COMME UN ELEMENT CONSTITUTIF D'UN DISPOSITIF CHAUFFANT**
ALS KOMPONENTE EINER HEIZVORRICHTUNG VERWENDETES GLAS
GLASS USED AS A COMPONENT OF A HEATING DEVICE

(30) Priorité: 19.12.2014 FR 1462875
(43) Date de publication de la demande: 25.10.2017
(73) Titulaire: Saint-Gobain Glass France, 92400 Courbevoie (FR)
(72) Inventeur: URIEN, Mathieu, 94120 Fontenay Sous Bois (FR); ILLY, Benoît, Cardiff CA 92007 (US); MAILLET, Alexandre, 60200 Compiegne (FR); ALSCHINGER, Matthias, 97334 Sommerach (DE)
(74) Mandataire: Saint-Gobain Recherche
(86) Numéro de dépôt international: PCT/FR2015/053476
(87) Numéro de publication internationale: WO 2016/097560

(56) Documents cités:
- WO-A1-2009/115596
- WO-A1-2014/125083
- WO-A2-2014/191474
- US-B1- 6 231 999

## Description

L'invention concerne un vitrage utilisé comme un élément constitutif d'un dispositif chauffant comprenant un substrat transparent revêtu d'un empilement de couches minces comprenant au moins une couche métallique fonctionnelle à base d'argent.

Un dispositif chauffant comprend une enceinte délimitée par une ou plusieurs parois et des moyens de chauffage de façon à permettre le chauffage de l'enceinte à une température élevée. Les dispositifs chauffants peuvent être notamment choisis parmi les fours, les cheminées, les fourneaux... Selon l'invention, les moyens de chauffage sont distincts de l'empilement de couches minces. Des vitrages automobiles chauffants dont l'empilement sert d'élément chauffant ne correspondant pas à un dispositif chauffant selon l'invention.

Les vitrages utilisés comme éléments constitutifs d'un dispositif chauffant sont en général des vitrages multiples, notamment des triples vitrages. Les vitrages multiples contribuent à maintenir la chaleur à l'intérieur du dispositif chauffant tout en gardant la surface extérieure du vitrage froide au toucher pour la protection des utilisateurs.

Un vitrage multiple comprend au moins deux substrats maintenus à distance de manière à délimiter un espace. Les faces du vitrage sont désignées à partir de l'intérieur du dispositif chauffant et en numérotant les faces des substrats de l'intérieur vers l'extérieur du dispositif chauffant.

Les vitrages utilisés comme éléments constitutifs d'un dispositif chauffant comprennent également des substrats revêtus de revêtements fonctionnels réfléchissants les rayonnements infrarouges (IR). Ces revêtements permettent de diminuer la quantité d'énergie dissipée vers l'extérieur du dispositif chauffant en réfléchissant la chaleur vers l'enceinte. L'utilisation de ces revêtements concourt à réduire la consommation du dispositif chauffant et l'échauffement du vitrage.

Les revêtements comprenant des couches métalliques fonctionnelles à base d'argent (ou couches d'argent) sont les plus performants pour réduire l'émissivité des vitrages tout en préservant les qualités optiques et esthétiques. Ces revêtements assurent une meilleure protection des utilisateurs, une plus basse consommation énergétique et un plus grand confort d'utilisation.

Cependant, la résistance chimique, thermique et mécanique des revêtements comprenant ces couches métalliques fonctionnelles à base d'argent est souvent insuffisante. Cette faible résistance se traduit lors d'une utilisation dans des conditions normales, c'est-à-dire à des températures inférieures à 100 °C, par l'apparition à court terme de défauts tels que des points de corrosion, des rayures, voire de l'arrachement total ou partiel de l'empilement.

Ce phénomène est accentué lorsque ces vitrages sont utilisés dans des dispositifs chauffants, par exemple comme porte de fours, soumis à des cycles de traitement thermique à températures élevées longs et répétés dans un environnement humide. Ces cycles de traitement thermique accélèrent encore davantage la dégradation des couches d'argent notamment par démouillage ou corrosion de l'argent.

Tous défauts ou rayures, qu'ils soient dus à la corrosion ou à des sollicitations mécaniques, sont susceptibles d'altérer non seulement les performances énergétiques et optiques mais également l'esthétique du substrat revêtu.

La faible résistance des empilements à base d'argent aux agressions chimiques et aux contraintes mécaniques lors du nettoyage par l'utilisateur limite leur utilisation comme vitrage dans des dispositifs chauffants. En effet, les produits alimentaires, les produits de nettoyage et les moyens mécaniques de nettoyage, tels que le frottement avec un chiffon, une éponge ou une brosse, peuvent dégrader l'empilement, voire provoquer un arrachement total ou partiel de l'empilement.

La demande US 2012/0084963 divulgue un vitrage multiple utilisé comme un élément constitutif d'une porte de four comprenant un substrat transparent revêtu d'un empilement de couches minces comprenant au moins une couche métallique fonctionnelle à base d'argent et une couche de protection supérieure à base d'oxyde de zirconium.

Les couches à base d'oxyde de zirconium protègent l'empilement lors d'un traitement thermique à température élevée. Cependant, les substrats revêtus de telles couches de protection sont sujets à la corrosion en milieu humide à chaud. L'utilisation de couches d'oxyde de zirconium ne permet pas d'améliorer suffisamment la résistance thermique, chimique et mécanique.

Il existe un besoin de développer de nouveaux empilements résistants à la fois aux traitements thermiques à température élevée répétés mais également à la corrosion à chaud en milieu humide et au nettoyage.

Le demandeur a découvert de manière surprenante que l'utilisation comme couche supérieure de protection d'une couche d'oxyde de titane et de zirconium permet d'atteindre ces objectifs en améliorant considérablement la résistance à la corrosion à chaud tout en conservant une bonne résistance aux attaques chimiques ou aux sollicitations mécaniques.

L'invention concerne un dispositif chauffant muni d'une enceinte délimitée par une ou plusieurs parois dont au moins une paroi comprend au moins un vitrage comprenant un substrat transparent revêtu d'un empilement de couches minces comprenant au moins une couche métallique fonctionnelle à base d'argent caractérisé en ce que l'empilement comprend une couche de protection supérieure à base d'oxyde de titane et de zirconium.

Le vitrage de l'invention convient dans toutes applications nécessitant l'utilisation d'un empilement comprenant des couches d'argent pour lesquelles la résistance à des traitements thermiques répétés et à la corrosion en milieu humide à chaud sont des paramètres clés. On peut notamment citer :
- les vitrages pour porte de four, pyrolytiques ou non,
- les vitrages pour porte d'insert de cheminée,
- les vitrages pour porte anti-feu,
- les vitrages pour éléments chauffants tels que les radiateurs et les sèches serviettes.

L'invention concerne également l'utilisation d'un vitrage comme élément constitutif d'un dispositif chauffant ou d'une porte anti-feu, le vitrage comprenant un substrat transparent revêtu d'un empilement de couches minces comprenant au moins une couche métallique fonctionnelle à base d'argent caractérisé en ce que l'empilement comprend une couche de protection supérieure à base d'oxyde de titane et de zirconium.

Le vitrage est de préférence choisi parmi les vitrages multiples comprenant au moins deux substrats transparents.

La couche de protection supérieure à base d'oxyde de titane et de zirconium présente par ordre de préférence croissant un rapport en poids de titane sur zirconium Ti/Zr compris entre 60/40 et 90/10, entre 60/40 et 80/20, entre 60/40 et 70/30, entre 60/40 et 65/35 ou entre 60/40 et 64/36.

La couche de protection supérieure à base d'oxyde de titane et de zirconium présente par ordre de préférence croissant un rapport atomique de titane sur zirconium Ti/Zr compris entre 2,0 et 4,0, de préférence 2,5 et 3,5.

Les couches d'oxyde de titane et de zirconium peuvent être déposées à partir d'une cible céramique de TiZrOx. Le rapport de titane sur zirconium Ti/Zr dans la couche est quasiment équivalent à celui de la cible.

Les cibles céramiques peuvent éventuellement comprendre d'autres éléments que l'on retrouve dans les couches déposées à partir de ces cibles.

La couche de protection supérieure est de préférence la dernière couche de l'empilement, c'est-à-dire la couche la plus éloignée du substrat revêtu de l'empilement.

La couche de protection supérieure a une épaisseur :
- inférieure ou égale à 15 nm, inférieure ou égale à 12 nm ou inférieure ou égale à 10 nm, et/ou
- supérieure ou égale à 1 nm, supérieure ou égale à 2 nm ou supérieure ou égale à 5 nm.

Le vitrage selon l'invention peut comprendre au moins un substrat transparent revêtu de plusieurs empilements de couches minces comprenant au moins une couche métallique fonctionnelle à base d'argent et/ou revêtements fonctionnels notamment un empilement ou revêtement sur chacune de ses faces.

Les couches d'argent sont déposées entre des revêtements diélectriques qui comprennent généralement plusieurs couches diélectriques permettant d'ajuster les propriétés optiques de l'empilement. Ces couches diélectriques permettent en outre de protéger la couche d'argent des agressions chimiques ou mécaniques. L'empilement de couches minces comprend donc avantageusement au moins une couche métallique fonctionnelle à base d'argent, au moins deux revêtements diélectriques, chaque revêtement diélectrique comportant au moins une couche diélectrique, de manière à ce que chaque couche métallique fonctionnelle soit disposée entre deux revêtements diélectriques.

De préférence, l'empilement de couches minces comprend une seule couche fonctionnelle.

L'empilement de couches minces comprend une ou plusieurs couches d'oxydes. Cependant, selon un mode de réalisation avantageux, l'épaisseur totale de toutes les couches d'oxydes présente dans l'empilement est inférieure à 10 nm, de préférence inférieure à 5 nm. Un empilement selon l'invention, présentant cette caractéristique présente les meilleurs résultats en termes de résistance aux traitements thermiques répétés à températures élevées.

L'empilement est déposé par pulvérisation cathodique, notamment assistée par un champ magnétique (procédé magnétron). Selon ce mode de réalisation avantageux, toutes les couches de l'empilement sont déposées par pulvérisation cathodique assistée par un champ magnétique.

Sauf mention contraire, les épaisseurs évoquées dans le présent document sont des épaisseurs physiques. On entend par couche mince, une couche présentant une épaisseur comprise entre 0,1 nm et 100 micromètres.

Dans toute la description le substrat selon l'invention est considéré posé horizontalement. L'empilement de couches minces est déposé au-dessus du substrat. Le sens des expressions « au-dessus » et « en-dessous » et « inférieur » et « supérieur » est à considérer par rapport à cette orientation. A défaut de stipulation spécifique, les expressions « au-dessus » et « en-dessous » ne signifient pas nécessairement que deux couches et/ou revêtements sont disposés au contact l'un de l'autre. Lorsqu'il est précisé qu'une couche est déposée « au contact » d'une autre couche ou d'un revêtement, cela signifie qu'il ne peut y avoir une ou plusieurs couches intercalées entre ces deux couches.

La couche métallique fonctionnelle à base d'argent comprend au moins 95,0 %, de préférence au moins 96,5 % et mieux au moins 98,0 % en masse d'argent par rapport à la masse de la couche fonctionnelle. De préférence, la couche métallique fonctionnelle à base d'argent comprend moins de 1,0 % en masse de métaux autres que de l'argent par rapport à la masse de la couche métallique fonctionnelle à base d'argent.

L'épaisseur des couches fonctionnelles à base d'argent est par ordre de préférence croissant comprise de 5 à 20 nm, de 8 à 15 nm.

L'empilement peut comprendre au moins une couche de blocage dont la fonction est de protéger les couches d'argent en évitant une éventuelle dégradation liée au dépôt d'un revêtement diélectrique ou liée à un traitement thermique. Ces couches de blocages sont situées de préférence au-contact des couches métalliques fonctionnelles à base d'argent.

L'empilement peut comprendre au moins une couche de blocage située en-dessous et au-contact d'une couche métallique fonctionnelle à base d'argent et/ou au moins une couche de blocage située au-dessus et au-contact d'une couche métallique fonctionnelle à base d'argent.

Parmi les couches de blocage traditionnellement utilisées, on peut citer les couches de blocage à base d'un métal choisi parmi le niobium Nb, le tantale Ta, le titane Ti, le chrome Cr ou le nickel Ni ou à base d'un alliage obtenu à partir d'au moins deux de ces métaux, notamment d'un alliage de nickel et de chrome (NiCr).

L'épaisseur de chaque surcouche ou sous-couche de blocage est de préférence :
- d'au moins 0,2 nm ou d'au moins 0,5 nm et/ou
- d'au plus 5,0 nm ou d'au plus 2,0 nm.

Les revêtements diélectriques présentent une épaisseur supérieure à 15 nm, de préférence comprise entre 15 et 50 nm et mieux de 30 à 40 nm.

Les couches diélectriques des revêtements diélectriques présentent les caractéristiques suivantes seules ou en combinaison :
- elles sont déposées par pulvérisation cathodique assistée par champ magnétique,
- elles sont choisies parmi les couches diélectriques à fonction barrière,
- elles sont choisies parmi les couches diélectriques à fonction stabilisante,
- elles sont choisies parmi les oxydes ou nitrures d'un ou plusieurs éléments choisi(s) parmi le titane, le silicium, l'aluminium, l'étain et le zinc,
- elles ont une épaisseur supérieure à 5 nm, de préférence comprise entre 8 et 50 nm et mieux de 10 à 35 nm.

On entend par couches diélectriques à fonction barrière, une couche en un matériau apte à faire barrière à la diffusion de l'oxygène et de l'eau à haute température, provenant de l'atmosphère ambiante ou du substrat transparent, vers la couche fonctionnelle. Les couches diélectriques à fonction barrière peuvent être à base de composés de silicium et/ou d'aluminium choisis parmi les oxydes tels que SiO₂, les nitrures tels que les nitrure de silicium Si₃N₄ et les nitrures d'aluminium AIN, et les oxynitrures SiOₓN_{y}, éventuellement dopé à l'aide d'au moins un autre élément. Les couches diélectriques à fonction barrière peuvent également être à base à base d'oxyde de zinc et d'étain.

On entend par couches diélectriques à fonction stabilisante, une couche en un matériau apte à stabiliser l'interface entre la couche fonctionnelle et cette couche. Les couches diélectriques à fonction stabilisante sont de préférence à base d'oxyde cristallisé, notamment à base d'oxyde de zinc, éventuellement dopé à l'aide d'au moins un autre élément, comme l'aluminium. La ou les couches diélectriques à fonction stabilisante sont de préférence des couches d'oxyde de zinc.

La ou les couches diélectriques à fonction stabilisante peuvent se trouver au-dessus et/ou en-dessous d'au moins une couche métallique fonctionnelle à base d'argent ou de chaque couche métallique fonctionnelle à base d'argent, soit directement à son contact ou soit séparées par une couche de blocage.

Selon un mode de réalisation avantageux, La couche diélectrique à base de nitrure de silicium et/ou d'aluminium est de préférence au-contact de la couche de protection supérieure à base d'oxyde de titane et de zirconium. La couche diélectrique à base de nitrure de silicium et/ou d'aluminium a une épaisseur :
- inférieure ou égale à 100 nm, inférieure ou égale à 50 nm ou inférieure ou égale à 40 nm, et/ou
- supérieure ou égale à 15 nm, supérieure ou égale à 20 nm ou supérieure ou égale à 25 nm.

Selon un mode de réalisation, l'empilement comprend :
- un revêtement diélectrique situé en-dessous de la couche métallique fonctionnelle à base d'argent,
- éventuellement une couche de blocage,
- une couche métallique fonctionnelle à base d'argent,
- éventuellement une couche de blocage,
- un revêtement diélectrique situé au-dessus de la couche métallique fonctionnelle à base d'argent,
- une couche de protection supérieure.

Selon un mode de réalisation, l'empilement comprend :
- un revêtement diélectrique situé en-dessous de la couche métallique fonctionnelle à base d'argent comprenant au moins une couche diélectrique à base de nitrure de silicium et/ou d'aluminium et éventuellement une couche diélectrique à fonction stabilisante à base d'oxyde de zinc,
- éventuellement une couche de blocage,
- une couche métallique fonctionnelle à base d'argent,
- éventuellement une couche de blocage,
- un revêtement diélectrique situé au-dessus de la couche métallique fonctionnelle à base d'argent comprenant au moins une couche diélectrique à base de nitrure de silicium et/ou d'aluminium,
- une couche de protection supérieure.

Les substrats transparents selon l'invention sont de préférence en un matériau rigide minéral, comme en verre, notamment silico-sodo-calcique, borosilicate, aluminosilicate ou vitrocéramique. Selon un mode de réalisation avantageux, les substrats sont des verres borosilicates qui résistent bien à de très hautes températures.

L'épaisseur du substrat varie généralement entre 0,5 mm et 19 mm. L'épaisseur du substrat est de préférence inférieure ou égale à 6 mm, voire 4 mm.

Le substrat transparent revêtu de l'empilement peut avoir subi un traitement thermique à température élevée choisi parmi un recuit, par exemple par un recuit flash tel qu'un recuit laser ou flammage, une trempe et/ou un bombage. La température du traitement thermique est supérieure à 400 °C, de préférence supérieure à 450 °C, et mieux supérieure à 500 °C. Le substrat revêtu de l'empilement peut donc être bombé et/ou trempé.

Le substrat revêtu de l'empilement est de préférence un verre trempé notamment lorsqu'il fait partie d'un vitrage utilisé dans comme élément constitutif d'un dispositif chauffant ou d'une porte anti-feu.

Le vitrage est de préférence un vitrage multiple comprenant deux, trois ou quatre substrats.

Un double vitrage comporte deux substrats, un substrat extérieur et un substrat intérieur et 4 faces. La face 1 est à l'intérieur du dispositif chauffant et constitue donc la paroi intérieure du vitrage. Les faces 2 et 3 sont à l'intérieur du double vitrage. La face 4 est à l'extérieur du dispositif chauffant et constitue donc la paroi extérieure du vitrage.

Un triple vitrage comporte trois substrats, un substrat extérieur, un substrat central et un substrat intérieur, et 6 faces. La face 1 à l'intérieur du dispositif chauffant et constitue donc la paroi intérieure du vitrage. Les faces 2 à 5 sont à l'intérieur du triple vitrage. La face 6 est à l'extérieur du dispositif chauffant et constitue donc la paroi extérieure du vitrage.

Le vitrage selon l'invention peut comprendre, au moins un, au moins deux, ou au moins trois substrats transparents revêtus d'un empilement de couches minces comprenant au moins une couche métallique fonctionnelle à base d'argent.

Le vitrage peut comprendre au moins un substrat transparent revêtu d'un revêtement fonctionnel autre qu'un empilement de couches minces comprenant au moins une couche métallique fonctionnelle à base d'argent tel qu'un revêtement comprenant un oxyde transparent conducteur (« TCO » en anglais), comme par exemple un matériau à base d'oxyde d'indium et d'étain (ITO), ou à base d'oxyde de zinc dopé à l'aluminium (ZnO:Al) ou dopé au bore (ZnO: B), ou encore à base d'oxyde d'étain dopé au fluor (SnO2: F). Ces matériaux sont déposés par voie chimique, comme par exemple par dépôt de vapeur chimique (« CVD »), éventuellement améliorée par plasma (« PECVD ») ou par voie physique, comme par exemple par dépôt sous vide par pulvérisation cathodique, éventuellement assistée par champ magnétique (« Magnétron »).

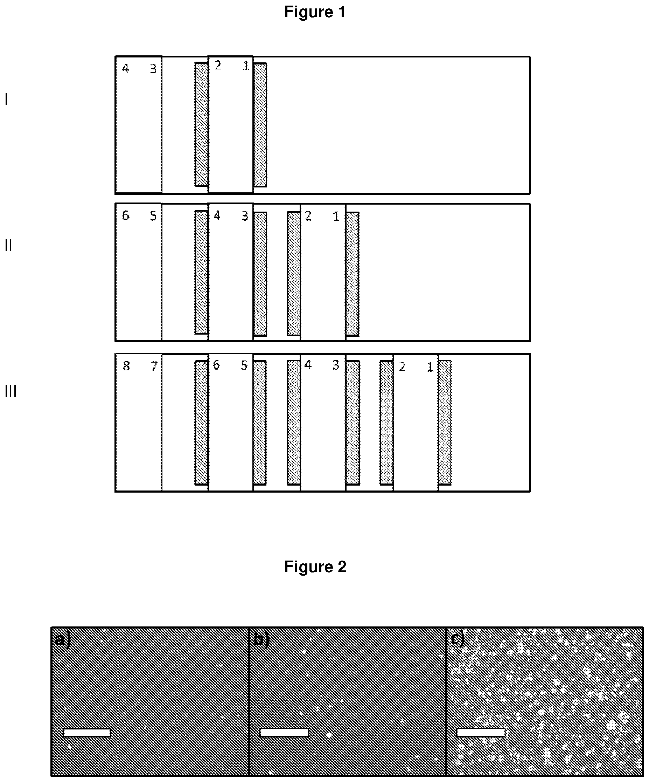

La figure 1 illustre trois exemples de dispositifs chauffants comprenant des vitrages multiples selon l'invention, un double vitrage (I), un triple vitrage (II) et un vitrage comprenant 4 substrats (III). Les parties en gris représentent les différentes positions où l'empilement de couches minces peut être utilisé.

Le dispositif chauffant permet le chauffage de l'enceinte à une température élevée notamment supérieure à 50, 100, 200, 300, 400, 500 ou 600 °C. Le dispositif chauffant comprend en outre des moyens de chauffage. Ces moyens de chauffage permettent le chauffage de l'enceinte à une température élevée notamment supérieure à 50, 100, 200, 300, 400, 500 ou 600 °C.

Dans un mode de réalisation particulier, l'empilement comprenant une couche fonctionnelle à base d'argent est positionné sur la face du substrat au contact de l'enceinte du dispositif chauffant.

### Exemples

Des empilements de couches minces définis ci-après sont déposés sur des substrats en verre sodo-calcique clair d'une épaisseur de 4 mm.

Pour ces exemples, les conditions de dépôt des couches déposées par pulvérisation (pulvérisation dite « cathodique magnétron ») sont résumées dans le tableau 1 ci-dessous

Les couches d'oxyde de titane et de zirconium sont déposées à partir d'une cible céramique de TiZrOx. Le rapport titane sur zirconium Ti/Zr dans la cible est de 64:36 en poids correspondant à 77:23 atomique. Le rapport de titane sur zirconium Ti/Zr dans la couche est quasiment équivalent à celui de la cible.

| **Tableau 1** | **Cibles employées** | **Pression dépôt** | **Gaz** | **Indice*** |
|---|---|---|---|---|
| Si₃N₄ sous Ag | Si:Al (92:8 % en pds) | 2-15*10⁻³ mbar | Ar:30-60 % - N₂:40-70 % | 2,00 |
| Si₃N₄ sur Ag | Si:Al (92:8 % en pds) | 2-15*10⁻³ mbar | Ar:30-60 % - N₂:40-70 % | 2,06 |
| NiCr | Ni:Cr (80:20 % at.) | 1-5*10⁻³ mbar | Ar à 100% | - |
| Ag | Ag | 2-3*10⁻³ mbar | Ar à 100 % | - |
| TiO₂ | TiOx | 1,5*10⁻³ mbar | Ar 88 % - O₂ 12 % | 2,32 |
| TiZrO | TiZrOx | 2-4*10⁻³ mbar | Ar 90 % - O₂ 10 % | 2,32 |

| | | | | |
|---|---|---|---|---|
| at. : atomique ; pds : poids ; * : à 550 nm. | | | | |

Le tableau ci-dessous liste les matériaux et les épaisseurs physiques en nanomètres (sauf autres indications) de chaque couche ou revêtement qui constitue les empilements en fonction de leurs positions vis-à-vis du substrat porteur de l'empilement.

| Vitrage | | Comp-1 | Comp-2 | Invention |
|---|---|---|---|---|
| Couche de protection supérieure | TiZrOx | - | - | 2 |
| | ZrOx | 2 | - | - |
| | SiOx | - | 2 | - |
| Revêtement antireflet | Si₃N₄ | 30 | 30 | 30 |
| Couche blocage OB | NiCr | 1 | 1 | 1 |
| Couche fonctionnelle | Ag | 7 | 7 | 7 |
| Couche blocage UB | NiCr | 1 | 1 | 1 |
| Revêtement antireflet | Si₃N₄ | 30 | 30 | 30 |
| Substrat (mm) | verre | 4 | 4 | 4 |

Un traitement thermique de type trempe est réalisé sur les substrats revêtus à 630 °C pendant 7 minutes.

La couche supérieure de protection du vitrage selon l'invention protège l'empilement des agressions extérieures et permet une très bonne durabilité thermique, mécanique et chimique comparée à d'autres couches de protection telles que des couches d'oxyde de zirconium (ZrO₂) ou d'oxyde de silicium (SiO₂). L'utilisation de cette couche de protection supérieure permet notamment l'utilisation de l'empilement en face 1, c'est-à-dire sur la face du substrat au contact de l'enceinte du dispositif chauffant tel qu'un four.

### I. Evaluation de la résistance thermique

L'aspect le plus important pour assurer la protection des personnes ainsi que des économies d'énergie est une bonne résistance de la couche à des températures élevées. Ceci n'est généralement pas possible avec des couches à l'argent qui se corrodent rapidement à hautes températures. Pour simuler le cycle de vie d'empilements de couches minces comprenant une couche d'argent dans un four autonettoyant pyrolytique, le substrat revêtu dudit empilement est chauffé pendant 500 h à 400 °C. Cela représente près de 15 ans d'utilisation en mode pyrolytique à raison d'un cycle de pyrolyse de 3 h par mois. La figure 2 présente des micrographies prises en fin de test de vitrages comprenant les différentes couches de protection.

Le vitrage selon l'invention représenté sur l'image (a) avec une couche de protection supérieure de TiZrOx ne présente que de très faibles dégradations visibles au microscope.

Le vitrage comparatif-2 représenté sur l'image (b) avec une couche de protection supérieure de SiOx présente des dégradations plus visibles

Le vitrage comparatif-1 représenté sur l'image (c) avec une couche de protection supérieure de ZrOx présente des dégradations flagrantes.

De plus, l'émissivité du vitrage comparatif-1 est augmentée de 25% ce qui réduit son efficacité alors que l'émissivité du vitrage de l'invention est constante.

### II. Evaluation de la résistance chimique et de la résistance au nettoyage

Le tableau ci-dessous présente les résultats de cycle de salissure à hautes températures. Ces cycles simulent les contraintes qu'un vitrage peut rencontrer notamment lors de son utilisation sur la face du substrat au contact de l'enceinte du dispositif chauffant. Le vitrage est souillé du côté de l'empilement avec différents produits alimentaires et produits de nettoyage puis chauffé à 200 °C pendant 2 h. Le verre est ensuite nettoyé avec un nettoyant four.

Le vitrage de l'invention comprenant un empilement avec une couche de protection supérieure à base de TiZrOx résiste à toutes les substances testées alors que les vitrages comparatifs 1 et 2 avec des couches de protection de ZrO₂ ou SiO₂ ne peuvent pas être nettoyés dans certains cas et sont endommagés de manière irréversible.

Les indicateurs d'appréciation suivants ont été utilisés pour constater les altérations éventuelles :
«+» : Pas de tâches visibles,
«-» : Tâches visibles.

| | Invention TiZrOx | Comp-2 SiO₂ | Comp-1 ZrO₂ |
|---|---|---|---|
| Vinaigre | + | + | - |
| Compote | + | + | - |
| Solution Saline | + | - | - |
| Jus de citron | + | + | + |
| Ajax | + | + | + |
| Cilit Bang® dégraissant | + | + | + |
| Matière grasse | + | - | + |
| DécapFour® | + | + | - |
| Traces de doigts | + | + | + |

Ces résultats montrent que l'empilement comprenant une couche fonctionnelle à base d'argent est suffisamment résistant aux produits d'entretiens et aux produits alimentaires pour pouvoir être positionné sur la face du substrat au contact de l'enceinte du dispositif chauffant.

## Revendications

1. Dispositif chauffant comprenant des moyens de chauffage et une enceinte délimitée par une ou plusieurs parois dont au moins une paroi comprend au moins un vitrage comprenant un substrat transparent revêtu d'un empilement de couches minces comprenant au moins une couche métallique fonctionnelle à base d'argent **caractérisé en ce que** l'empilement comprend une couche de protection supérieure à base d'oxyde de titane et de zirconium.

2. Dispositif chauffant selon la revendication 1 **caractérisé en ce que** la couche de protection supérieure a une épaisseur :
- inférieure ou égale à 15 nm, et/ou
- supérieure ou égale à 1 nm.

3. Dispositif chauffant selon l'une quelconque des revendications précédentes, **caractérisé en ce que** le rapport atomique de titane sur zirconium Ti/Zr est compris entre 2,0 et 4,0, de préférence 2,5 et 3,5.

4. Dispositif chauffant selon l'une quelconque des revendications précédentes, **caractérisé en ce que** l'empilement comprend une couche diélectrique à base de nitrure de silicium et/ou d'aluminium située en-dessous de la couche supérieure de protection à base d'oxyde de titane et de zirconium.

5. Dispositif chauffant selon la revendication 4, **caractérisé en ce que** la couche diélectrique à base de nitrure de silicium et/ou d'aluminium a une épaisseur :
- inférieure ou égale à 50 nm, et/ou
- supérieure ou égale à 20 nm.

6. Dispositif chauffant selon l'une quelconque des revendications 4 ou 5 **caractérisé en ce que** la couche diélectrique à base de nitrure de silicium et/ou d'aluminium est au-contact de la couche de protection supérieure à base d'oxyde de titane et de zirconium.

7. Dispositif chauffant selon l'une quelconque des revendications précédentes, **caractérisé en ce que** l'empilement de couches minces comprend au moins une couche métallique fonctionnelle à base d'argent, au moins deux revêtements diélectriques, chaque revêtement diélectrique comportant au moins une couche diélectrique, de manière à ce que chaque couche métallique fonctionnelle soit disposée entre deux revêtements diélectriques.

8. Dispositif chauffant selon l'une quelconque des revendications précédentes, **caractérisé en ce que** l'empilement comprend au moins une couche de blocage située en-dessous et au-contact d'une couche métallique fonctionnelle à base d'argent et/ou au moins une couche de blocage située au-dessus et au-contact d'une couche métallique fonctionnelle à base d'argent.

9. Dispositif chauffant selon l'une quelconque des revendications précédentes, **caractérisé en ce que** l'empilement comprend :
- un revêtement diélectrique situé en-dessous de la couche métallique fonctionnelle à base d'argent,
- éventuellement une couche de blocage,
- une couche métallique fonctionnelle à base d'argent,
- éventuellement une couche de blocage,
- un revêtement diélectrique situé au-dessus de la couche métallique fonctionnelle à base d'argent,
- une couche de protection supérieure.

10. Dispositif chauffant selon l'une quelconque des revendications précédentes, **caractérisé en ce que** l'empilement comprend :
- un revêtement diélectrique situé en-dessous de la couche métallique fonctionnelle à base d'argent comprenant au moins une couche diélectrique à base de nitrure de silicium et/ou d'aluminium et éventuellement une couche diélectrique à fonction stabilisante à base d'oxyde de zinc,
- éventuellement une couche de blocage,
- une couche métallique fonctionnelle à base d'argent,
- éventuellement une couche de blocage,
- un revêtement diélectrique situé au-dessus de la couche métallique fonctionnelle à base d'argent comprenant au moins une couche diélectrique à base de nitrure de silicium et/ou d'aluminium,
- une couche de protection supérieure.

11. Dispositif chauffant selon l'une quelconque des revendications précédentes caractérisé en ce l'empilement comprenant une couche fonctionnelle à base d'argent est positionné sur la face du substrat au contact de l'enceinte du dispositif chauffant.

12. Dispositif chauffant selon l'une quelconque des revendications précédentes caractérisé en ce le vitrage est un vitrage multiple comprenant deux, trois ou quatre substrats.

13. Dispositif chauffant selon l'une quelconque des revendications précédentes **caractérisé en ce qu'**au moins le substrat revêtu de l'empilement est bombé et/ou trempé.

14. Utilisation d'un vitrage comme élément constitutif d'un dispositif chauffant, comprenant des moyens de chauffage et une enceinte délimitée par une ou plusieurs parois, ou d'une porte anti-feu, le vitrage comprenant un substrat transparent revêtu d'un empilement de couches minces comprenant au moins une couche métallique fonctionnelle à base d'argent **caractérisé en ce que** l'empilement comprend une couche de protection supérieure à base d'oxyde de titane et de zirconium.

15. Utilisation d'un vitrage selon la revendication 14 **caractérisé en ce qu'**il est choisi parmi les vitrages multiples comprenant au moins deux substrats transparents.

## Patentansprüche

1. Heizvorrichtung, umfassend Heizmittel und einen Raum, der von einer oder mehreren Wänden begrenzt wird, wovon mindestens eine Wand mindestens eine Verglasung umfasst, die ein transparentes Substrat umfasst, das mit einem Dünnschichtsystem mit mindestens einer metallischen Funktionsschicht auf Silberbasis beschichtet ist, **dadurch gekennzeichnet, dass** das Schichtsystem eine obere Schutzschicht auf Basis von Titan- und Zirconiumoxid umfasst.

2. Heizvorrichtung nach Anspruch 1, **dadurch gekennzeichnet, dass** die obere Schutzschicht eine Dicke:
- kleiner oder gleich 15 nm, und/oder
- größer oder gleich 1 nm aufweist.

3. Heizvorrichtung nach einem der vorhergehenden Ansprüche, **dadurch gekennzeichnet, dass** das Atomverhältnis von Titan zu Zirconium Ti/Zr zwischen 2,0 und 4,0, vorzugsweise 2,5 und 3,5 liegt.

4. Heizvorrichtung nach einem der vorhergehenden Ansprüche, **dadurch gekennzeichnet, dass** das Schichtsystem eine dielektrische Schicht auf Basis von Silicium- und/oder Aluminiumnitrid umfasst, die sich unter der oberen Schutzschicht auf Basis von Titan- und Zirconiumoxid befindet.

5. Heizvorrichtung nach Anspruch 4, **dadurch gekennzeichnet, dass** die dielektrische Schicht auf Basis von Silicium- und/oder Aluminiumnitrid eine Dicke:
- kleiner oder gleich 50 nm, und/oder
- größer oder gleich 20 nm aufweist.

6. Heizvorrichtung nach einem der Ansprüche 4 oder 5, **dadurch gekennzeichnet, dass** die dielektrische Schicht auf Basis von Silicium- und/oder Aluminiumnitrid in Kontakt mit der oberen Schutzschicht auf Basis von Titan- und Zirconiumoxid ist.

7. Heizvorrichtung nach einem der vorhergehenden Ansprüche, **dadurch gekennzeichnet, dass** das Dünnschichtsystem mindestens eine metallische Funktionsschicht auf Silberbasis, mindestens zwei dielektrische Beschichtungen umfasst, wobei jede dielektrische Beschichtung mindestens eine dielektrische Schicht umfasst, sodass jede metallische Funktionsschicht zwischen zwei dielektrischen Beschichtungen angeordnet ist.

8. Heizvorrichtung nach einem der vorhergehenden Ansprüche, **dadurch gekennzeichnet, dass** das Schichtsystem mindestens eine Blockierschicht, die sich unterhalb einer metallischen Funktionsschicht auf Silberbasis befindet und mit dieser in Kontakt steht, und/oder mindestens eine Blockierschicht, die sich über einer metallischen Funktionsschicht auf Silberbasis befindet und mit dieser in Kontakt steht, umfasst.

9. Heizvorrichtung nach einem der vorhergehenden Ansprüche, **dadurch gekennzeichnet, dass** das Schichtsystem Folgendes umfasst:
- eine dielektrische Beschichtung, die sich unter der metallischen Funktionsschicht auf Silberbasis befindet,
- gegebenenfalls eine Blockierschicht,
- eine metallische Funktionsschicht auf Silberbasis,
- gegebenenfalls eine Blockierschicht,
- eine dielektrische Beschichtung, die sich über der metallischen Funktionsschicht auf Silberbasis befindet,
- eine obere Schutzschicht.

10. Heizvorrichtung nach einem der vorhergehenden Ansprüche, **dadurch gekennzeichnet, dass** das Schichtsystem Folgendes umfasst:
- eine dielektrische Beschichtung, die sich unter der metallischen Funktionsschicht auf Silberbasis befindet und mindestens eine dielektrische Schicht auf Basis von Silicium- und/oder Aluminiumnitrid und gegebenenfalls eine dielektrische Schicht mit stabilisierender Funktion auf Zinkoxidbasis umfasst,
- gegebenenfalls eine Blockierschicht,
- eine metallische Funktionsschicht auf Silberbasis,
- gegebenenfalls eine Blockierschicht,
- eine dielektrische Beschichtung, die sich über einer metallischen Funktionsschicht auf Silberbasis befindet und mindestens eine dielektrische Schicht auf Basis von Silicium- und/oder Aluminiumnitrid umfasst,
- eine obere Schutzschicht.

11. Heizvorrichtung nach einem der vorhergehenden Ansprüche, **dadurch gekennzeichnet, dass** das eine Funktionsschicht auf Silberbasis umfassende Schichtsystem auf der Seite des Substrats in Kontakt mit dem Raum der Heizvorrichtung positioniert ist.

12. Heizvorrichtung nach einem der vorhergehenden Ansprüche, **dadurch gekennzeichnet, dass** die Verglasung eine Mehrfachverglasung mit zwei, drei oder vier Substraten ist.

13. Heizvorrichtung nach einem der vorhergehenden Ansprüche, **dadurch gekennzeichnet, dass** mindestens das Substrat, das mit dem Schichtsystem beschichtet ist, gebogen und/oder thermisch vorgespannt ist.

14. Verwendung einer Verglasung als Bestandteil einer Heizvorrichtung, die Heizmittel und einen von einer oder mehreren Wänden begrenzten Raum umfasst, oder einer Brandschutztür, wobei die Verglasung ein transparentes Substrat umfasst, das mit einem Dünnschichtsystem mit mindestens einer metallischen Funktionsschicht auf Silberbasis beschichtet ist, **dadurch gekennzeichnet, dass** das Schichtsystem eine obere Schutzschicht auf Basis von Titan- und Zirconiumoxid umfasst.

15. Verwendung einer Verglasung nach Anspruch 14, **dadurch gekennzeichnet, dass** sie aus Mehrfachverglasungen ausgewählt ist, die mindestens zwei transparente Substrate umfassen.

## Claims

1. A heating device comprising heating means and a chamber delimited by one or more walls, at least one wall of which comprises at least one glazing comprising a transparent substrate coated with a stack of thin layers comprising at least one silver-based functional metal layer, **characterized in that** the stack comprises an upper protective layer based on zirconium titanium oxide.

2. The heating device as claimed in claim 1, **characterized in that** the upper protective layer has a thickness:
- of less than or equal to 15 nm, and/or
- of greater than or equal to 1 nm.

3. The heating device as claimed in either one of the preceding claims, **characterized in that** the atomic ratio of titanium to zirconium Ti/Zr is between 2.0 and 4.0, preferably 2.5 and 3.5.

4. The heating device as claimed in any one of the preceding claims, **characterized in that** the stack comprises a dielectric layer based on silicon and/or aluminum nitride located below the upper protective layer based on zirconium titanium oxide.

5. The heating device as claimed in claim 4, **characterized in that** the dielectric layer based on silicon and/or aluminum nitride has a thickness:
- of less than or equal to 50 nm, and/or
- of greater than or equal to 20 nm.

6. The heating device as claimed in either one of claims 4 and 5, **characterized in that** the dielectric layer based on silicon and/or aluminum nitride is in contact with the upper protective layer based on zirconium titanium oxide.

7. The heating device as claimed in any one of the preceding claims, **characterized in that** the stack of thin layers comprises at least one silver-based functional metal layer and at least two dielectric coatings, each dielectric coating comprising at least one dielectric layer, so that each functional metal layer is positioned between two dielectric coatings.

8. The heating device as claimed in any one of the preceding claims, **characterized in that** the stack comprises at least one blocking layer located below and in contact with a silver-based functional metal layer and/or at least one blocking layer located above and in contact with a silver-based functional metal layer.

9. The heating device as claimed in any one of the preceding claims, **characterized in that** the stack comprises:
- a dielectric coating located below the silver-based functional metal layer,
- optionally a blocking layer,
- a silver-based functional metal layer,
- optionally a blocking layer,
- a dielectric coating located above the silver-based functional metal layer,
- an upper protective layer.

10. The heating device as claimed in any one of the preceding claims, **characterized in that** the stack comprises:
- a dielectric coating located below the silver-based functional metal layer comprising at least one dielectric layer based on silicon and/or aluminum nitride and optionally a dielectric layer having a stabilizing function based on zinc oxide,
- optionally a blocking layer,
- a silver-based functional metal layer,
- optionally a blocking layer,
- a dielectric coating located above the silver-based functional metal layer comprising at least one dielectric layer based on silicon and/or aluminum nitride,
- an upper protective layer.

11. The heating device as claimed in any one of the preceding claims, **characterized in that** the stack comprising a silver-based functional layer is positioned on the face of the substrate in contact with the chamber of the heating device.

12. The heating device as claimed in any one of the preceding claims, **characterized in that** the glazing is a multiple glazing comprising two, three or four substrates.

13. The heating device as claimed in any one of the preceding claims, **characterized in that** at least the substrate coated with the stack is bent and/or tempered.

14. The use of a glazing as constituent element of a heating device, comprising heating means and a chamber delimited by one or more walls, or of a fireproof door, the glazing comprising a transparent substrate coated with a stack of thin layers comprising at least one silver-based functional metal layer, **characterized in that** the stack comprises an upper protective layer based on zirconium titanium oxide.

15. The use of a glazing as claimed in claim 14, **characterized in that** the glazing is chosen from multiple glazings comprising at least two transparent substrates.
